# EUROPEAN PATENT SPECIFICATION

(11) **EP 1 550 170 B1**
(45) Date of publication and mention of the grant of the patent: **18.08.2010**
(21) Application number: 03751089.8
(22) Date of filing: 07.10.2003
(51) Int. Cl.: H01M 4/04

(54) **METHOD OF MANUFACTURE OF AN ENERGY STORAGE DEVICE**
VERFAHREN ZUR HERSTELLUNG EINER ENERGIESPEICHERVORRICHTUNG
PROCEDE DE FABRICATION D'UN DISPOSITIF DE STOCKAGE D'ENERGIE

(30) Priority: 07.10.2002 US 416593 P
(43) Date of publication of application: 06.07.2005
(73) Proprietor: Gen3 Partners, Inc., Boston, MA 02109 (US)
(72) Inventor: LYUBOMIRSKIY, Alexander, Brookline, MA 02445 (US); PAVLOV, Valentinovich, Valeriy, Saint Petersburg, 197372 (RU); TIMONOV, Mikhailovich, Alexander, Saint Petersburg, 191028 (RU); LOGVINOV, Anatolijevich, Sergey, Saint Petersburg, 188350 (RU); PIVUNOV, Ivanovich, Dmitriy, Saint Petersburg, 197349 (RU); VASILJEVA, Viktorovna, Svetlana, Saint Petersburg, 197349 (RU); SHKOLNIK, Nik, West Hartford, CT 06117 (US); KOGAN, Sam, Newton Center, MA 02459 (US)
(74) Representative: Reichert, Werner Franz
(86) International application number: PCT/IB2003/004410
(87) International publication number: WO 2004/032261

(56) References cited:
- US-B1- 6 323 309
- REDDINGER J L ET AL: "TUNABLE REDOX AND OPTICAL PROPERTIES USING TRANSITION METAL- COMPLEXED POLYTHIOPHENES" MACROMOLECULES, AMERICAN CHEMICAL SOCIETY. EASTON, US, vol. 30, no. 3, 10 February 1997 (1997-02-10), pages 673-675, XP000678019 ISSN: 0024-9297
- REDDINGER ET AL.: CHEM. MAT. , vol. 10, 1998, pages 1236-1243, XP009024632
- REDDINGER ET AL.: CHEM. MAT. , vol. 10, 1998, pages 3-5, XP009024677
- ALATORRE ORDAZ ET AL.: ANALUSIS, vol. 28, 2000, pages 238-244, XP009024693
- LIU ET AL.: ANALYTICAL LETTERS, vol. 33, no. 2, 2000, XP009024683
- MAO ET AL.: ELECTROANALYSIS, vol. 12, no. 1, 2000, pages 72-77, XP009024739
- HOFERKAMP ET AL.: CHEM. MAT., vol. 1, 1989, pages 348-352, XP009024771
- BEDIOUI: J. ELECTROANAL. CHEM, vol. 301, 1991, pages 267-274, XP009024767

## Description

### FIELD OF THE INVENTION

The Invention relates to the field of electrochemistry. More specificalty, the present Invention relates to the methods of manufacture of energy storage devices (e.g., capacitors) that include electrodes that are chemically modified by a redox polymer.

### BACKGROUND OF THE INVENTION

The known methods of manufacture of electrodes with a polymer coating are mainly based on the method of electro-chemical polymerization [for example, US. Pat. No 4,999,263 March 12, 1991; U.S. Pat No 6,533,918, March 18, 2003; U.S. Pat. Appl. No 20020089807A1, July 11, 2002]. The process of electro-chemical polymerization involves forming a polymer layer on a conducting substrate placed Into an electrolytic bath with an electrolyte containing polymer compounds. Different polymer coatings are formed depending on the electrolytes used for this purpose.

Both purely organic systems and polymer metal complexes (or organometallic compounds) fall Into the category of the redox polymers [H.G.Cassidy and K.A.Kun. Oxidation Reduction Polymer //Redox Polymers. Wiley - Interscience, New York, 1965]. Polymers that contain a metal usually offer better conductivity.

F. Bedioul at al., J. Electroanal. Chem., 301 (1991) 267-274 describe the electrooxidative polymerization of cobalt, nickel and manganese salen-complexes In acetonitrile solution and added tetrabutylammonium tetrafluoroborate.

L.A. Hoferkamp, K.A. Golds of by, Chem. Mat. 1 (1989) 348-352 report on the preparation and properties surface-modified electrodes prepared by oxidative polymerization of substituted and nan-substituted NI-salen and Cu-salen complexes. The modified electrodes were prepared In weak donor solvents such as acetonitrile, methylene chloride and acetone under addition of tetra-n-butylammonium hexafluorophosphate (TBAH). Both preparation and characterization of the modified electrodes were carried out using solely TBAH as additional salt.

L Mao et al., Electroanalysis 12 (2000) 72-77 use electropolymerised M-salen films with central metal Ions of Co. Fe, Cu, and Mn as nitric oxide sensors.

G. Liu et al., Analytical Letters 33 (2000) 176-192 study the preparation and electrochemical characteristics of Co-salen polymer film modified electrodes and its electro-catalytic effects on the oxidation of ascorbic acid. They also studied the effect of several supporting electrolytes on the voltammetric behaviour of Me-salen polymer film electrodes.

J.L Raddinger, J.R Reynolds, Macromolecules 30 (1997) 673-675 report on tunable redox properties of thiophene based metal-salen electrodes.

J.L Reddinger, J.R. Reynolds, Chem. Mater. 10 (1998) 3-5 provide an extension of their previous study to a polymer sensor and demonstrate ion specific effects on polymere' redox potentials when adding alkali and alkaline earth ions to monomer-free tetrabutylammonium perchlorate solution during measurement.

A.A. Ordaz et al., Analuais 28 (2000) 238-244 study the electrocatalytic capabilities of electrodes modified by polymer films, In particular poly-(Co-salen), applied to the detection of various organohalide derivatives as pollutants.

J.L. Reddinger, J.R. Reynolds, Chem. Mater. 10 (1998) 1238-1343 describe thiophene based salon-metal complexes possessing multiple polymerization sites to afford polymers comprised of different backbone constitutions and a variety of film colours.

US 6,323,309 B1 discloses several conducting polymer structured consisting of organic units and metal ions by talloring the position of metal ions with respect to conductive pathways providing chemoresistive devices, field effective transistors and signal amplifiers.

Redox polymers produced from the octahedral source complex compounds are known. Polypyridine complexes of the composition poly-[Me(v-bpy)x(L)y], where: Me = Co. Fe, Ru, Os; L = v-bpy (4-vinyl-4'-methyl-2,2'-bipyridine), phenanthroline-5,6-dione, 4-methylphenanthroline, 5-aminophenanthroline, 5-chlorophenanthroline (x+y=3) [Hurrel H.C., Abruna H.D. Redox Conduction in Electropolymerized Films of Transition Metal Complexes of Os, Ru, Fe, and Co // Inorganic Chemistry. 1990. V.29. P.736-741], as well as porphyrin and phthalacyanine metal complexes and electrodes modified by these complexes [U.S. Pat. No 5,729,427. U.S. Pat. No 5,840,443] may serve as examples of such redox polymers. However, the above-named polymers are characterized by poor energy-accumulating properties and are not used for the production of electrodes for energy-storage devices.

Polymer metal complexes based on the substituted tetra-dentate Schiff's bases, including poly-[Me(R-Salan)] (where Me - a transition metal having at least two different degrees of oxidation - e.g. Ni, Pd: Co, Cu, Fe; Salen - a residue of bis-(saiicyta)dehydo)-ethytenodiamine in Schiff's base. R - electron-donating substituent - e.g. radicals CH₃O-, C₂H₅O-, HO-, -CH₃ and others), are known [Timonov A.M., Shagisultanova G.A., Popeko I.E. Polymeric Partially Oxidized Complexes of Nickel, Palladium and Platinum with Schiff Bases // Workshop on Platinum Chemistry. Fundamental and Applied Aspects. Italy, Ferrara, 1991. P. 28]. The above-named polymer complexes were produced via the electrochemical oxidation of square-planar monomers [Me(R-Salen)], and the stack structure of a polymer was confirmed through the use of spectral methods.

Known (from publications) studies of metal complexes poty-[Me(R-Salen)] and electrodes chemically modified by these metal complexes conducted by the inventors of the present invention and other researchers were of theoretical nature. They were directed at the identification of structure and electrochemical behavior of these polymers. Exclusively analytical chemistry and optics were considered as a fields of potential application of these polymers, such as in U.S. Pat. No 6,323,309, U.S. Pat. No 5,543,326, and U.S. Pat. No 5,840,443.

Moreover, many researchers working in this field believe that poly-[Me(R-Salen)] are formed due to the covalent bonds between the phenyl nuclei of monomers, and not due to the formation of the stack structures-[P.Audebert. P.Capdavielle. M.Maumy. Redox and Conducting Polymers based on Satan-Type Metal Units; Electrochemical Study and Some Characteristics // New J. Chem. 1992. V. 16. P. 697], which, in turn, according to their opinion, makes it Impossible to use poly-[Me(R-Selen)] as an energy-accumulating substance In energy-storage devices.

However, that negative attitude toward the redox polymers (as an energy-accumulating layer) is more likely caused by specific features of the formation of the redox polymer layer on a conducting substrate and, at the end, by the structure of the formed layer (rather than by the electrochemical properties of the redox polymer itself). The problem solved by the present invention is the development of a method of manufacture of the electrodes chemically modified by a redox polymer and offering a high specific energy capacity for use in energy-storage devices, as well as a method of manufacture of energy-storage devices that incorporate said electrodes.

### SUMMARY OF THE INVENTION

The present method of manufacture of an energy storage device is implemented as follows. A conducting substrate and a counter electrode are placed in an electrolyte that contains an organic solvent, compounds capable of dissolving In said solvent [which dissolution is accompanied by the production of electrochemically inactive (at concentrations of no less than 0.01 mol/l) ions within the range of potentials from -3.0 V to +1.5 V] and a dissolved monomer - namely, metal complex poly-[Me(R-Salen)] at a concentration from 5×10⁻⁵ mole/liter to that restricted by the solubility limit (where Me is a transition metal, R - is an electron-donating substituent, or H, and Salen is a residue of bis-(salicylaldehyde)ethylenediamine In Schiff's base). The layer of a redox polymer can be applied onto a substrate surface via electrochemical polymerization of a metal complex poly-[Me(R-Salen)], resulting from the application of a voltage between electrode substrate (that serves as an anode) and counter-electrode (that serves as a cathode) submerged into the electrolyte. The polymer-modified electrode and the counter electrode are then submerged in a different electrolyte to complere the manufacture of the energy storage device.

The distinctive feature of the present method is the deposition of the redox polymer performed in the electrolyte in which the cations of the above-named compounds have a diameter that is larger than the diameter of cations of the compounds comprising the electrolyte used in an energy-storage device for which the electrodes are manufactured. For example, when the salts of tetraethyl ammonium and tetramethyl ammonium (perchlorates, tetrafluotoborates, hexafluoro phosphates) are used in the composition of the electrolyte for an energy-storage device, salts of tetrapropyl ammonium and tetrabutyl ammonium (tetrafluoroborates, perchlorates, hexafluoro phosphates, trifluoroacetates) can be used as a compound in the composition of an electrolyte in which the deposition of redox polymer layer onto a substrate occurs.

The large sizes of the cations of tetrapropyl ammonium and tetrabutyl ammonium facilitate the formation of the polymer stacks disposed sufficiently far apart from each other, which reduces the probability of cross linking of the stacks. When the electrode is in use, the cations of the electrolyte used in an energy storing device freely move between the polymer layer stacks, resulting in an increase of the energy capacity and stability of operation of the energy-storing device.

A material that offers a high value of the specific surface parameter that is characterized by good electronic conduction and that is electrochemically inactive within the range of potentials from -3.0 to +1.5 V (the potentials are given in comparison to a chlorine-silver electrode) can be used as a conducting substrate of the electrode. For example, it Is possible to use the carbon fiber and other carbon materials offering a high value of a specific surface parameter, carbon materials with metal coatings, and metal electrodes offering a high value of a specific surface parameter. Besides, polymers (offering an electronic conduction property) in the form of films, porous structures, foams and so forth can be used as a conducting substrate.

A metal from the group Ni, Pd, Co, Cu, Fe is used as a transition metal Me in the metal complex.

CH₃O-, C₂H₅O-, HO-. -CH₃ are used as the electron-donating substituents R in the composition of the metal complex.

A layer of the redox polymer is deposited onto the substrate when the potential on the substrate is within the range from 0.85 V to 1.3 V relative to a chlorine-silver comparison electrode disposed in the electrolyte. A specific value of the potential shouldn't be higher than the potential of nonreversible oxidation of the redox polymer - for example, 0.85 V for complex [Pd(CH₃O-Salen)] or 1.3 V for complex [Ni(Cl-Salen)].

Deposition of a layer of the redox polymer can also be carried out with the simultaneous circulation of the electrolyte, which allows to improve the quality of the manufactured electrode.

### BRIEF DESCRIPTION OF THE DRAWINGS

The invention is illustrated by the following graphical materials and drawings.
Fig. 1 presents a schematic diagram of an apparatus for implementing the method making an electrode.
Figs. 2(a) - (c) is a schematic illustration of the process of redox polymer layer formation; Fig. 2(a) illustrates the initial stage of the process, Fig. 2(b) illustrates the process of formation of the stack structure of a redox polymer in the case when the cations of the electrolyte compounds have a large diameter; Fig. 2(c ) illustrates the same process for the case when the cations of the electrolyte compounds have a small diameter.
Fig. 3 is a chrono-volt-ampere-gram of the electrode manufactured in accordance with the method of the present invention.
Fig. 4 is a chrono-volt-ampere-gram of the electrode manufactured without meeting the requirements on the size of the cations of the electrolyte compounds.

### DETAILED DESCRIPTION OF THE INVENTION

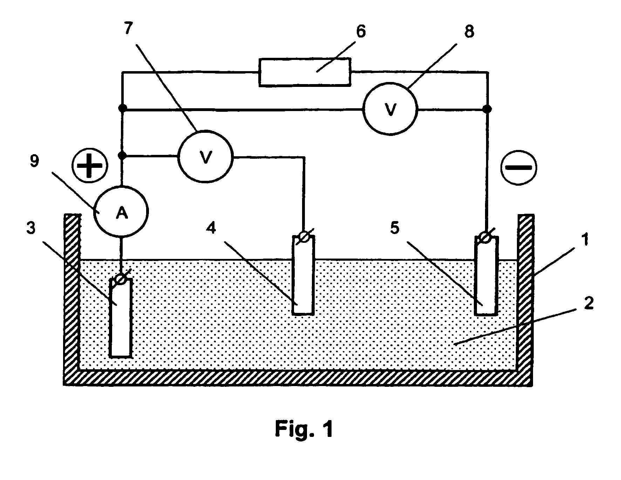

A schematic diagram of an apparatus for depositing the redox polymer layer onto a substrate of an electrode in accordance with the inventive method is shown In Fig. 1. The apparatus comprises the following components. Reservoir 1 is filled with electrolyte 2, into which conducting substrate 3, comparison electrode 4 (e.g. a chlorine-silver electrode), and counter electrode 5 are submerged. Substrate 3 is electrically connected to the positive pole of voltage source 6, while counter electrode 5 is connected to the negative pole of voltage source 8. Control Instruments for measuring and monitoring the voltage between substrate 3 and counter electrode 6 (voltmeter 7), voltage between substrate 3 and comparison electrode 4 (voltmeter 8) and the intensity of current flowing In the circuit of substrate 3 (ampere meter 9) are connected according to the scheme shown in Fig. 1.

Electrolyte 2 can be prepared based on organic solvents of the acetone, dimethyl ketone, or propylene carbonate type. To prepare electrolyte 2. one should add certain substances to the solvents indicated above. Such substances should be capable of dissolving in said solvents with the resulting concentration of no less than 0.0.1 mol/l and dissociating with the formation of electrochemically inactive (within the range of potentials from-3.0 V to + 1.5 V) ions. Among such substances are, for example, salts of tetrapropyl ammonium and salts of tetrabutyl ammonium such as tetrafluoro-borate., perchlorates, hexafluoro phosphates, trifluoroacetates and other substances meeting the above-indicated requirements. Besides solvent and electrochemically inactive ions, the electrolyte contains dissolved metal complex [Me(R-Salen)], out of which a redox polymer layer on electrode substrate 3 will be formed. The concentration of the metal complex may be from 6×10⁻⁵ mole/liter and higher- up to a value restricted by the solubility limit of the metal complex in used solvent used in the process.

Formation of the redox polymer layer on electrode substrate 3 occurs under the constant voltage applied by source 6 across substrate 3 and counter electrode 5, in this process, the molecules of metal complex [Me(R-Salen)] located In electrolyte 2 are oxidized on the surface of conducting substrate 3, thus forming a redox polymer layer. This process is conducted until the formation of a redox polymer layer of required thickness is completed.

The electrode manufactured in the above-described manner then (after washing and drying) can be used directly in the design of an energy storing device (e.g. capacitor).

Circulation of electrolyte 2 can take place in bath (reservoir) 1 in the course of formation of redox polymer layer.

The main specific feature of the present method of manufacturing an electrode rests in selecting the compounds used to provide ionic conduction of the electrolyte - the cations of the above-named compounds should have a diameter that is larger than the diameter of the cations of the electrolyte used in the energy-storage device where the electrode operates.

For example, the ions of tetrafluoroborate (BF₄⁻), perchlorate (ClO₄⁻), hexafluorophosphate (PF₆⁻), trifluoroacetate (CF₃COO⁻) can be used as anions of said compounds (the diameters of these anions are, respectively, 0.333 nm, 0.370 nm, 0.435 nm and 0.720 nm), while the ions of tetrapropyl ammonium ((C₃H₇)₄N⁺, diameter - 0.77 nm), tetrabutyl ammonium ((C₄H₉)₄N⁺, diameter - 0.96 nm) can be used as cations. Other compounds meeting the above-indicated requirements may be used as anions and cations.

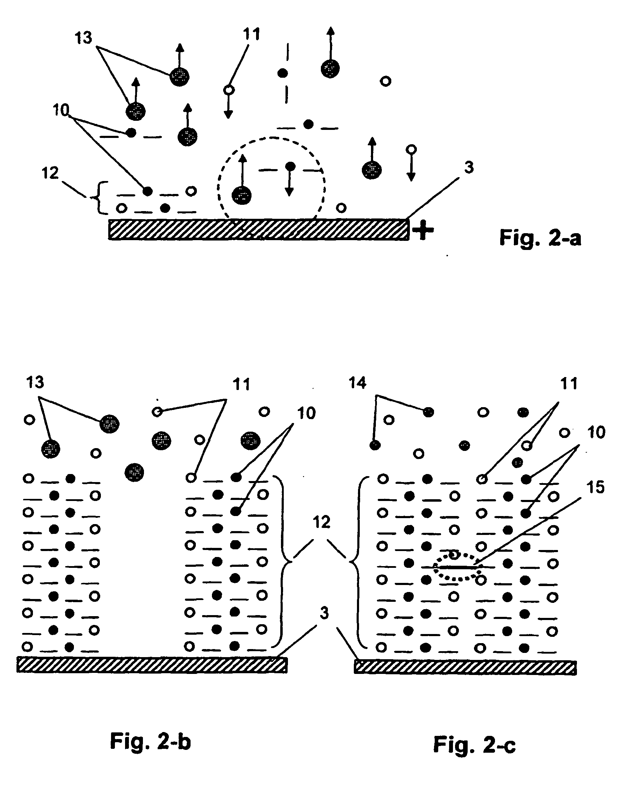

During the redox polymer layer formation, when positive potential at which oxidation of the source metal complex molecules is possible, is applied to conducting substrate 3 (relative to comparison/reference electrode 4), the particles present in the electrolyte occurs move in the opposite direction, as shown in Fig. 2(a):
molecules 10 of the source metal complex diffuse to substrate 3;
anions 11 of the compound migrate to conducting substrate 3 of the electrode, where they compensate for the positive charge of formed polymer stacks 12 (polymer fragments);
cations 13 of the compound migrate from substrate 3, thus creating obstacles to the oppositely movingf molecules 10 of the metal complex (the greater the size of cations 13 is, the more "insurmountable" these obstacles are).

This leads to a situation in which during the initial phase of polymer formation in the form of a stack structure, the molecules of a metal complex can not arrange on substrate surface at a minimally possible distance from each other. If a gap between incipient stacks is smaller than the size of the molecules of the metal complex (1.1 nm), then at a later time the gap would not be "occupied" by them and would remain "vacant". Thus, the presence of the cations of different sizes in the solution makes it possible to form different distances between the polymer stacks during the polymer formation process.

Stacks 12 located at a considerable distance from one another are formed in the presence of cations 13 of a large diameter (see Fig. 2-b), while in the presence of cations 14 of relatively small diameter the distances between stacks 12 are short (see Fig. 2-c).

Increasing the distance between stacks 12 results in the decrease of the probability of cross-linking 15 of stacks 12, which can be observed in the case of cations 14 of a small diameter (see Fig. 2-c). Besides, the size of the cations of a compound also affects the size of the cavities between the stacks that can be formed because of the roughness of the substrate surface and the flexibility of the long polymer stacks.

When using a manufactured electrode in an electrochemical device (for instance, as capacitor electrodes), the cations of the electrolyte compensate for the charge of the polymer molecules on the negative electrode during the charging process. Use of the smaller-diameter cations in the electrolyte of an electrochemical device, as compared to the diameter of the cations used in the polymer formation process, leads to an easier motion of the smaller-diameter cations between the stacks of polymer layer of the negative electrode during the charging-discharging process. This results in the increase of the energy capacity of an electrochemical device and enhancement of the stability of its operation (stability of the charging-discharging currents over time).

Formation of the redox polymer layer of required thickness can take place not in one stage by using one electrolyte, but also in several stages by using different electrolytes and, possibly, metal complexes at these stages.

An electrode manufactured according to the present method can be used in energy-storing devices (for example, in an electrochemical capacitor).

Usually such a capacitor comprises a hermetically sealed casing (filled with an electrolyte), in which a positive and a negative electrodes disposed. Depending on the specific features of capacitor design, the electrodes can be separated by a porous separator - for example, by microporous polypropylene film.

An electrolyte for the capacitor can be prepared based on the organic solvents of the acetonitrile, dimethyl ketone, propylene carbonate type or other types. To prepare an electrolyte for the capacitor, one should add certain compounds to the solvents indicated above. Such compounds should be capable of dissolving in said solvents with the resulting concentration of no less than 0.01 mol/l and dissociating with the formation of electrochemically inactive (within the range of potentials from -3.0 V to +1.5 V) ions of a diameter no greater than 0.6 nm. Among such substances are, for example, the salts of tetraethyl ammonium, tetramethyl ammonium - perchlorates, tetrafluoroborates, hexafluorophosphates and other substances meeting the above-indicated requirements.

An example of the implementation of the method of manufacturing an electrode in accordance with the present invention is described herein.

An electrode for a supercapacitor was produced through the use of glass-carbon conducting substrate (the area of substrate surface - 0.07 cm²) via electrochemical polymerization of complex [Ni(Salen)] on its surface. A polymer layer was formed under the following conditions.

An electrolyte used for polymer formation contained a solvent (acetonitrile, AN), source complex [Ni(Salen)], the concentration of which was C_{c} = 10⁻³ mol/l, and tetrafluoroborate of tetrabutyl ammonium (the concentration of which was 0.05 mol/l).

The polymer layer on the conducting substrate surface of an electrode was formed under the constant potential of the substrate E_{M} = 0.95 V (relative to the reference/comparison chlorine-silver electrode) for a period of 10 min (τ_{H} =10 min.).

After a polymer layer was formed, the electrode was washed with acetonitrile and then placed into another deaerated base electrolyte solution that didn't contain the source complex. Prior to using the electrode, it was subjected to polarization at 0 V for 3 minutes (this was done to transfer the polymer from the oxidized state to the neutral state - (Ni(II)). Then the electrode was held in the same solution without applying external potential for a period of 25 minutes.

A control specimen of the electrode was produced under the same conditions as described above, but tetrafluoroborate of tetramethyl ammonium (in the same concentration) instead of tetrafluoroborate of tetrabutyl ammonium was used in the electrolyte to form the polymer.

Testing of the electrodes was conducted in the mode of high-rate charging and discharging of the negative electrode in a device similar to the one showed in Fig. 1. The composition of the electrolyte for electrode testing was as follows: acetonitrile, tetrafluoroborate of tetramethyl ammonium (with concentration being equal to 0.05 mol/l). Charging and discharging of the electrodes was conducted while the electrodes were polarized in a linearly varying potential, with the rate of potential variation being equal to 0.1 V/s within the range from 0 V to -2 V (the charging time was 20 s, the discharging time was 20 s).

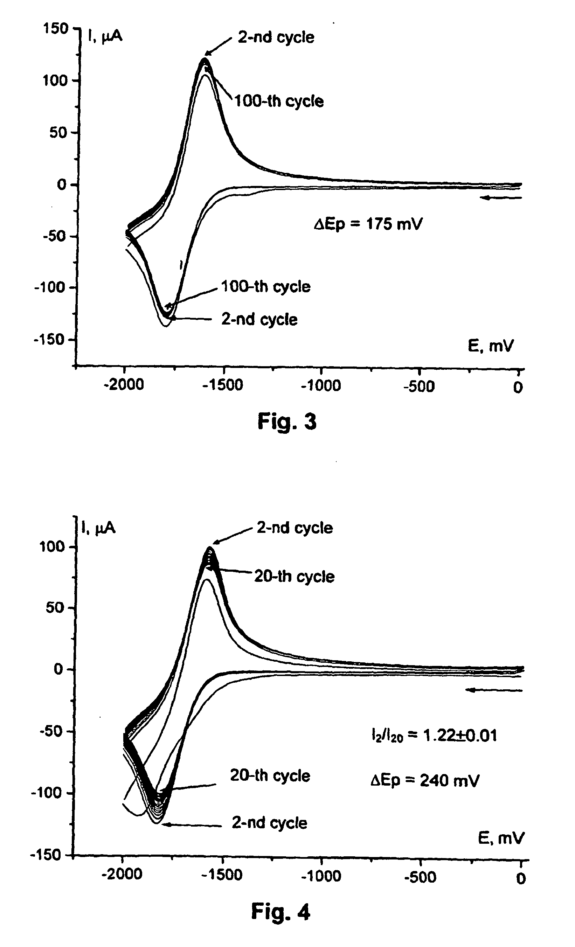

The chrono-volt-ampere-grams of the main electrode and control specimen are shown in Fig. 3 and Fig. 4, respectively.

The results of the testing were as follows.

The maximal currents of charging and discharging of an electrode manufactured by the inventive method were stabilized by the 15th cycle and did not vary until the completion of the tests (i.e. during 100 cycles). However, the drop of current with each subsequent cycle was observed for the control specimen. The ratio between the charging currents for the 2nd and 20th cycles was 1.22.

The difference of potentials ΔEp of maxima of the anode and cathode current reflecting the kinetic difficulties of charging/discharging process of the electrode manufactured by the present method was 175 mV (for the control specimen it was 240 mV).

An electrode manufactured by the above-described method and having the structure with the increased distances between the redox polymer stacks possesses a greater power and improved stability as compared to an electrode manufactured by the conventional technology.

## Claims

1. A method for the manufacture of an energy storage device comprising: submerging a conducting substrate and a counter electrode into a first electrolyte containing
an organic solvent:
a compound capable of dissolving in said solvent, which process is accompanied by the production of electrochemically inactive ions, at concentrations of no less than 0,01 mol/l, of a first size within the range of potentials from -3,0 V to +1,5 V, and
a metal complex [Me(R-Salen)] at concentrations of no less than 5×10-5 mol/l, where:
Me is a transition metal having at least two different degrees of oxidation.
R is an electron-donating substituent or H, and
Salen is a residue of bis-(salicylaidehyde)- ethylenediamine in Schiff base;
supplying voltage between the said substrate that serves as anode and the said counter electrode that serves as cathode;
carrying out an electrochemical polymerization to apply the redox polymer of the poly[Me(R-Salen)] type onto said substrate In the first electrolyte to provide an electrode; and
submerging the electrode and the counter electrode into a second electrolyte, wherein the cations of the above-named compound have a diameter that is larger than the diameter of cations of the second electrolyte.

2. The method of claim 1, wherein the conducting substrate is made of an electron conducive material which b electrochemically inactive within the range of potentials from -3,0 V to +1.5 V.

3. The method of claim 2, wherein the conducting substrate is made of a carbon material

4. The method of claim 2, wherein the conducting substrate is made of a carbon material with a metal coating.

5. The method of claim 2, wherein the conducting substrate Is made of an electronically conductive polymer in the form of a film, porous structure, or solid foam.

6. The method of claim 1, wherein the organic solvent is acetonitrile, dimethyl ketone, or propylene carbonate.

7. The method of claim 1, wherein the compounds are salts of tetrapropyl ammonium and salts of tetrabutyl ammonium selected from the group consisting of tetrafluoroborates, perchlorates, hexafluoro phosphatas, and trifluoroacetates.

8. The method of claim 1, wherein the transition metal Me is selected from the group consisting of Nl, Pd. Co, Cu, Fe, and combinations thereof.

9. The method of claim 1, wherein the electron-donating substituent R is selected from the group consisting of CH₃O-, C₂H₅O-, HO-. -CH₃, and combinations thereof.

10. The method of claim 1, wherein depositing the redox polymer onto the substrate occurs at a substrate potential no higher than a potential of nonreversible oxidation of the redox polymer.

11. The method of claim 1, further comprising circulating the electrolyte while depositing the redox polymer.

12. An energy storage device comprising:
an electrode having a layer of redox polymer of a poly-[Me(R-Salen)] type, wherein the redox polymer layer comprises one or more polymer stacks, the polymer stacks are separated by a distance, and
Me is a transition metal having at least two different degrees of oxidation,
R is an electron-donating substituent or H, and
Salen is a residue of bis-(sallcylaldehyde) - ethylenediamine in Schiff bass; and
an electrolyte, wherein the cations of the electrolyte have a diameter smaller than the distance between the polymer stacks.

## Patentansprüche

1. Verfahren zur Herstellung einer Energiespeichervorrichtung, wobei das Verfahren umfasst: Tauchen eines leitenden Substrats und einer Gegenelektrode in einen ersten Elektrolyten, der Folgendes enthält:
ein organisches Lösungsmittel;
eine Verbindung, die sich in dem Lösungsmittel lösen kann, wobei der Prozess von der Erzeugung elektrochemisch inaktiver Ionen mit Konzentrationen von nicht weniger als 0,01 mol/l mit einer ersten Größe innerhalb des Bereichs von Potentialen von -3,0 V bis +1,5 V begleitet ist, und
einen Metallkomplex [Me(R-Salen)] mit Konzentrationen von nicht weniger als 5·10⁻⁵ mol/l, wobei:
Me ein Übergangsmetall mit wenigstens zwei verschiedenen Oxidationsgraden ist,
R ein elektronenabgebender Substituent oder H ist, und
Salen ein Rest von Bis-(Salicylaldehyd)-Ethylendiamin in einer Schiffschen Base ist;
Anlegen einer Spannung zwischen dem Substrat, das als Anode dient, und der Gegenelektrode, die als Katode dient;
Ausführen einer elektrochemischen Polymerisation zum Auftragen des Redoxpolymers vom Poly[Me(R-Salen)]-Typ auf das Substrat in dem ersten Elektrolyten, um eine Elektrode bereitzustellen; und
Tauchen der Elektrode und der Gegenelektrode in einen zweiten Elektrolyten,
wobei die Kationen der oben genannten Verbindung einen Durchmesser aufweisen, der größer als der Durchmesser der Kationen des zweiten Elektrolyten ist.

2. Verfahren nach Anspruch 1, bei dem das leitende Substrat aus einem elektronenleitenden Material hergestellt wird, das innerhalb des Bereichs von Potentialen von -3,0 V bis +1,5 V elektrochemisch inaktiv ist.

3. Verfahren nach Anspruch 2, bei dem das leitende Substrat aus einem Kohlenstoffmaterial hergestellt wird.

4. Verfahren nach Anspruch 2, bei dem das leitende Substrat aus einem Kohlenstoffmaterial mit einer Metallbeschichtung hergestellt wird.

5. Verfahren nach Anspruch 2, bei dem das leitende Substrat aus einem elektronisch leitenden Polymer in Form eines Films, einer porösen Struktur oder einem festen Schaum hergestellt wird.

6. Verfahren nach Anspruch 1, bei dem das organische Lösungsmittel Acetonitril, Dimethylketon oder Propylencarbonat ist.

7. Verfahren nach Anspruch 1, bei dem die Verbindungen Salze von Tetrapropylammonium und Salze von Tetrabutylammonium sind, die aus der Gruppe ausgewählt sind, die aus Tetrafluorboraten, Perchloraten, Hexafluorphosphaten und Trifluoracetaten besteht.

8. Verfahren nach Anspruch 1, bei dem das Übergangsmetall Me aus der Gruppe ausgewählt ist, die aus Ni, Pd, Co, Cu, Fe und Kombinationen davon besteht.

9. Verfahren nach Anspruch 1, bei dem der elektronenabgebende Substituent R aus der Gruppe ausgewählt ist, die aus CH₃O-, C₂H₅O-, HO-, -CH₃ und Kombinationen davon besteht.

10. Verfahren nach Anspruch 1, bei dem das Ablagern des Redoxpolymers auf dem Substrat bei einem Substratpotential stattfindet, das nicht höher als ein Potential der irreversiblen Oxidation des Redoxpolymers ist.

11. Verfahren nach Anspruch 1, das ferner das Umwälzen des Elektrolyten während des Ablagerns des Redoxpolymers umfasst.

12. Energiespeichervorrichtung, die umfasst:
eine Elektrode mit einer Schicht eines Redoxpolymers eines Poly-[Me(R-Salen)]-Typs, wobei die Redoxpolymerschicht einen oder mehrere Polymerstapel umfasst, wobei die Polymerstapel durch einen Abstand getrennt sind und wobei:
Me ein Übergangsmetall mit wenigstens zwei verschiedenen Oxidationsgraden ist,
R ein elektronenabgebender Substituent oder H ist, und
Salen ein Rest von Bis-(Salicylaldehyd)-Ethylendiamin in einer Schiffschen Base ist; und
einen Elektrolyten, wobei die Kationen des Elektrolyten einen Durchmesser aufweisen, der kleiner als der Abstand zwischen den Polymerstapeln ist.

## Revendications

1. Méthode de fabrication d'un dispositif de stockage d'énergie, comprenant : la submersion d'un substrat conducteur et une contre-électrode dans un premier électrolyte contenant un solvant organique ;
un composé capable de se dissoudre dans ledit solvant, processus qui est accompagné par la production d'ions électrochimiquement inactifs, à des concentrations supérieures ou égales à 0,01 mol/l, d'une première taille située dans la plage de potentiels de -3,0 V à +1,5 V, et
un complexe métallique [Me(R-salène)] à des concentrations supérieures ou égales à 5x10⁻⁵ mol/l, où :
Me est un métal transitoire qui a au moins deux différents degrés d'oxydation,
R est un substituant donateur d'électrons ou H, et
le salène est un résidu de bis-(salicylaldéhyde)-éthylènediamine dans la base de Schiff ;
l'alimentation de courant entre ledit substrat qui sert d'anode et ladite contre-électrode qui sert de cathode ;
la réalisation d'une polymérisation électrochimique pour appliquer le polymère redox du type poly [Me(R-salène)] sur le substrat dans le premier électrolyte afin d'obtenir une électrode ; et
la submersion de l'électrode et de la contre-électrode dans un deuxième électrolyte, les cations du composé susmentionné ayant un diamètre plus grand que le diamètre des cations du deuxième électrolyte.

2. Méthode selon la revendication 1, dans laquelle le substrat conducteur est fabriqué en un matériau conducteur d'électrons électrochimiquement inactif dans la plage de potentiels de -3,0 V à +1,5 V.

3. Méthode selon la revendication 2, dans laquelle le substrat conducteur est fabriqué en un matériau carboneux.

4. Méthode selon la revendication 2, dans laquelle le substrat conducteur est fabriqué en un matériau carboneux avec un revêtement métallique.

5. Méthode selon la revendication 2, dans laquelle le substrat conducteur est fabriqué en un polymère conducteur d'électrons sous forme de film, de structure poreuse ou de mousse solide.

6. Méthode selon la revendication 1, dans laquelle le solvant organique est l'acétonitrile, le diméthylcétone, ou le carbonate de propylène.

7. Méthode selon la revendication 1, dans laquelle les composés sont des sels d'ammonium tétrapropyle et de sels d'ammonium tétrabutyle sélectionnés dans le groupe constitué de tétrafluoroborates, perchlorates, hexaftuoro phosphates et trifluoroacétates.

8. Méthode selon la revendication 1, dans laquelle le métal transitoire Me est sélectionné dans le groupe constitué de Ni, Pd, Co, Cu, Fe et de combinaisons de ces derniers.

9. Méthode selon la revendication 1, dans laquelle le substituant donateur d'électrons R est sélectionné dans le groupe constitué de CH₃O-, C₂H₅O-, HO-, -CH₃ et de combinaisons de ces derniers.

10. Méthode selon la revendication 1, dans laquelle le dépôt du polymère redox sur le substrat se produit à un potentiel de substrat inférieur ou égal au potentiel d'oxydation non réversible du polymère redox.

11. Méthode selon la revendication 1, comprenant en outre la circulation de l'électrolyte pendant le dépôt du polymère redox.

12. Dispositif de stockage d'énergie, comprenant :
une électrode présentant une couche de polymère redox du type poly-[Me(R-salène)], la couche de polymère redox comprenant une ou plusieurs piles de polymères, les piles de polymères étant séparées d'une certaine distance, et Me est un métal transitoire qui a au moins deux différents degrés d'oxydation,
R est un substituant donateur d'électrons ou H, et
le salène est un résidu de bis-(salicylaldéhyde)-éthylènediamine dans la base de Schiff ; et
un électrolyte, les cations de l'électrolyte ayant un diamètre plus petit que la distance entre les piles de polymères.
